# EUROPEAN PATENT SPECIFICATION

(11) **EP 1 470 080 B1**
(45) Date of publication and mention of the grant of the patent: **17.12.2008**
(21) Application number: 02794465.1
(22) Date of filing: 31.12.2002
(51) Int. Cl.: C02F 1/32, C02F 1/38, B01D 21/26, B01D 29/90, B01D 29/33

(54) **APPARATUS AND METHOD FOR SEPARATING AND FILTERING PARTICLES AND ORGANISMS FROM FLOWING LIQUIDS**
VORRICHTUNG UND VERFAHREN ZUM ABTRENNEN UND ABFILTRIEREN VON TEILCHEN UND ORGANISMEN AUS STRÖMENDEN FLÜSSIGKEITEN
APPAREIL ET PROCEDE DE SEPARATION ET DE FILTRAGE DE PARTICULES ET D'ORGANISMES A PARTIR DE LIQUIDES D'ECOULEMENT

(30) Priority: 09.01.2002 NO 20020093
(43) Date of publication of application: 27.10.2004
(73) Proprietor: Nilsen, Birgir, Stamford, CT 06906 (US); Nilsen, Halvor, 4027 Stavanger (NO)
(72) Inventor: Nilsen, Birgir, Stamford, CT 06906 (US); Nilsen, Halvor, 4027 Stavanger (NO)
(74) Representative: Iannone, Carlo Luigi
(86) International application number: PCT/US2002/041909
(87) International publication number: WO 2003/059821

(56) References cited:
- WO-A-01/62393
- FR-A- 2 791 904
- GB-A- 1 282 217
- US-A- 4 271 019

## Description

### FIELD OF THE INVENTION

This application is directed to an apparatus and method for separating and filtering particles and organisms from a high volume flowing liquid operating under low pressure, with an automatic back flushing self-cleaning system, with ultraviolet treatment of water and use of the device in a ballast water treatment system for ships.

### BACKGROUND OF THE INVENTION

The invention relates to a unit for separating and filtering particles and organisms from a high flowing liquid operating under low pressure with an automatic back flushing self-cleaning system aboard ships ballast water systems.

### Description of Prior Art

A separator is normally used to remove suspended solids particles from liquids having a different size and specific gravity. This is achieved by the liquid entering tangentially, setting up a circular flow creating a vortex then entering the separation chamber were the centrifugal action directs particles heavier than the liquid to the perimeter of the separation chamber. Sludge is collected in the lower chamber and bled through a sludge discharge pipe. The liquids free of particles are drawn out from the center of the separator and can exit in the bottom or the top of the unit. Simple controls regulate the balance of flow between clean liquid and sludge and maintain the system pressure required for sludge discharge.

A filter is used for the same purpose thus creating a higher-pressure loss making it difficult to use a filter device with high volume flowing liquids under low pressure, this is especially relevant for installations aboard ships where space and weight constraints prevail. Document WO 01/62393 describes a device for separation of particles in a liquid, said device comprising a cylindrical cyclone sieve, having a tangential inlet for liquid.

### SUMMARY OF THE INVENTION

It is an objective of the invention to provide a device that can separate and filter particles and organisms from a high volume flow of liquid under low operating pressure thereby reducing the size, weight of the device and thereby simplifying operational issues relating to the challenge of treating ballast water aboard ships.

Traditional filters require large space to be able to treat the necessary flow volume requirements, and, in addition, increase ballasting time required because of excessive back flushing cycles. Hydro-cyclones operate well without maintenance and work well removing particles down to a certain size and specific gravity, but not organisms because of their specific gravity, which is close to that of water.

This invention provides for, both the ease of use of a hydro-cyclone and the efficiency of a filter, in one device.

To this end the invention provides a device for separating and filtering particles and organisms from a high volume liquid flow operating under low pressure, with an automatic back flushing self-cleaning system, comprising:
a cone-shaped inlet chamber with an upper inlet/outlet pipe extending longitudinally through the center of the chamber;
a separation and filter chamber with a longitudinal filter element connected to the said upper back flushing inlet pipe;
a discharge chamber with a longitudinal lower outlet pipe connected to the said filter element in the center, separated from the separation and filter chamber by a flow restrictor;
a tangential liquid inlet opening into said inlet chamber creating an circular flow increasing down towards the said separation and filter chamber where the liquid spins around the filter element, separating out larger particles towards the perimeter and filtering smaller particles and organisms as they follow the main flow towards the main outlet pipe in the bottom of the unit; and,
a backpressure valve installed on the main outlet pipe ensures sufficient backpressure to discharge the sludge discharge from the sludge chamber.

In a preferred embodiment, the apparatus and method includes a UV chamber for treating processed liquid in order to inactivate aquatic nuisance species including bacteria, microorganisms and pathogens.

The back flushing cycle is initiated by a pressure differential between the main inlet and the outlet. When the pressure differential reaches a preset level (typically, 30 mbar) across the filter/separator chamber back flushing is initiated and controlled by a Programmable Logistic Computer (PLC).

The filter/separating device of this invention is particularly suitable for the use of removing particles and organisms aboard ship ballast water systems, to reduce sediment loads in the ballast tanks and to prevent the spreading of aquatic nuisance species. Ships use high flow low-pressure pumps, and the pump room is normally below sea level creating a backpressure in the sludge discharge system.

Other advantages and preferred features of the invention will become apparent from the following description of the preferred embodiments, given by way of no limiting example, with reference to the accompanying drawing.

### BRIEF DESCRIPTION OF THE DRAWING

A preferred embodiment of the invention has been chosen for detailed description to enable those having ordinary skill in the art to which the invention appertains to readily understand how to practice the invention and is shown in the accompanying drawing in which:
Fig. 1A is a schematic longitudinal section view of the filter/separator device in accordance with the invention.
Fig. 1B includes a perspective view and a section view of a wedge wire screen filter surface for filtering larger particles from a high volume, low pressure liquid flow.
Fig. 1C is a fragmentary perspective view of the construction of the filter element.
Fig. 1D is a schematic view of a modified inlet chamber having a cylindrical chamber, whis is not part of the present invention.
Fig. 2A is a schematic view of the filter/separator device using main liquid for back flushing, and including a UV chamber for inactivating aquatic nuisance species in processed liquid.
Fig. 2B is a schematic view of the filter/separator device using clean pressurized liquid for back flushing and compressed air for air scrubbing.
Fig 2C is a schematic view of a combination of the operating components of Figures 2A and 2B.
Fig. 2D is a schematic view of the filter/separator device using the upper pipe of the device as outlet pipe and the lower pipe as back flushing pipe.

### DETAILED DESCRIPTION OF THE PREFERRED EMBODIMENT

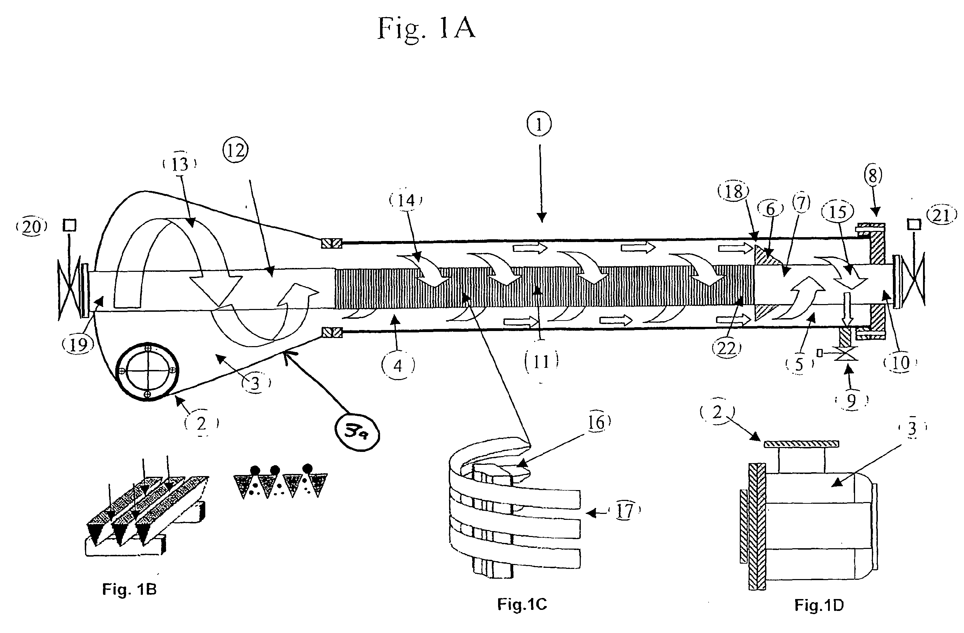

Referring to Figure 1A of the drawing, the principal components of the liquid separator and filter device (1) are inlet chamber (3), separation and filter chamber (4), sludge chamber (5), and longitudinally disposed upper outlet pipe (19), cylindrical filter element (11) and lower outlet pipe (10).

Fig. 1A shows the filter and separator device (1), where the high volume, lower pressure liquid inlet (2) is mounted tangentially to circular inlet chamber (3) which is, in turn, connected to the separation and filter chamber (4). The inlet chamber is designed to meet the least possible fluid flow resistance and directs pumped liquid (13) in a helical circular motion around the longitudinal upper outlet pipe (19) which passes through the center of the inlet chamber (3). The liquid (13) forms a circular spinning flow into and through the separation and filter chamber (4) without forming a vortex as in traditional hydro-cyclones. The liquid (13) accelerates in the conical inlet chamber (3) and increases the centrifugal forces acting on the flowing fluid and entrained particles. Particles with higher specific gravity than that of the fluid are drawn to the coned wall (3a) and flow down to the inlet (4) of the separation and filter chamber. These particles follow the inner wall down through the opening (18) to the sludge chamber (5). At the same time, the smaller lighter particles will follow the liquid along the outer surface (11a) of the cylindrical filter element (11) that runs longitudinally through the center of the separation and filter chamber (14).

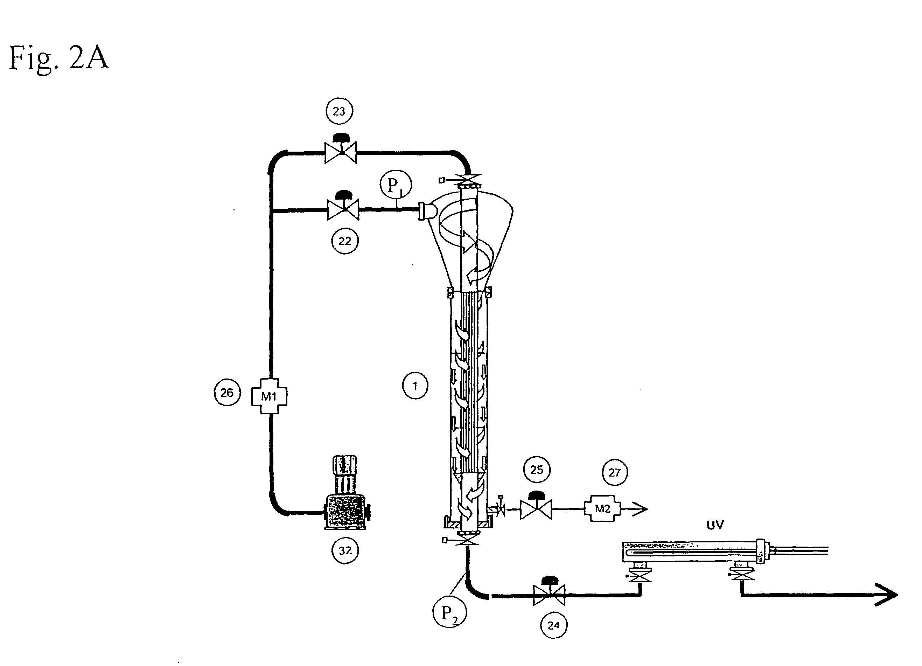

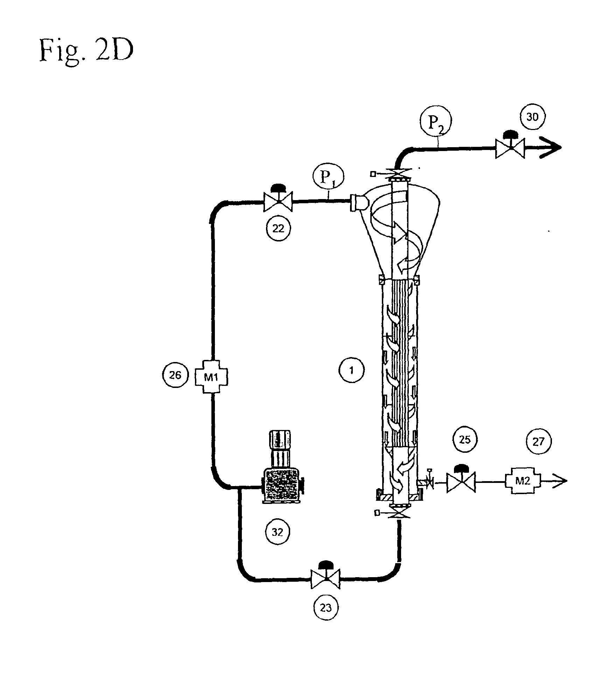

The filter/separator unit (1) has both upper (19) and lower (10) outlets to make it practical for the installation and to give more flexibility for the piping and installation work. When one of the outlets is being used the other can be used for back flushing as needed. Compare Figures 2A and 2D. Both outlet pipes (19, 10) are installed with isolation valves (20, 21) that can be opened or closed manually or automatically. There are control valves installed on the two outlets that will control and maintain the pressure inside the unit to ensure automatic and continuous flow from the discharge chamber (5). The pressure inside the chamber has to be higher then the backpressure from the discharge.

The separation and filter chamber together with the sludge chamber (5) are built from one pipe with a flange in both ends and are built with a flow restrictor (6) that is coned downward into the sludge chamber (5) to reduce turbulence and back flows. The separation chamber's (4) length is dependent on the desired efficiency and flow capacity. Increased length will increase the time the liquid stays in the chamber and smaller particles get enough time to reach the perimeter of the separation chamber from the centrifugal forces.

The sludge chamber (5) receives sludge-like liquid through the opening (18) between the flow restrictor (6) and the wall of the pipe. The flow patterns are reduced when reaching the sludge chamber (5). Sludge is bled out through the sludge valve (9). The sludge valve (9) regulates the flow, and the internal pressure should be regulated to 3 -10 % of the main flow (13) depending on the amount of sludge in the discharge.

The outlet pipe (10) is connected to an end flange (8). The inner part of the outlet pipe (22) has the connection for the filter element (11).

The control valves (20, 21) on the outlet pipes (19, 10) maintain a constant pressure in the separation chamber (4) and maintaining enough internal pressure into the sludge chamber (5) to maintain a constant flow through the sludge valve (9).

Fig. 1B and Fig. 1C show enlarged parts of the filter element (11), which is built by rings of wedge wire connected to an inner frame (16) that runs axial with the filter element (11), where the opening between the wedge wires are decided per specification. As illustrated in Fig. 1B, larger particles are stopped and smaller particles fall through the wedge. The filtering capacity of the wedge wire screen is set by length and diameter. The filter element is built around an inner frame (16) to achieve mechanical strength, and to smooth the filter surface on the outside. The opening between the wedge wire (17) is V-shaped, and can be between 10 to 500 micron. Particles larger than the opening (17) will slide down along the surface (11a) of the filter towards the flow restrictor (6) while particles smaller than the opening will penetrate through the filter. Because of the wedge wire V-shape the individual opening (17) expands inward towards the center of the filter element and avoids getting particles trapped in the slots between the wedge wires. The ends of the filter element (11) can be fitted with different fasteners to the filter separator unit outlet pipes (10, 19).

In normal operation (Fig. 2A), liquid flows to the filter separator from a pump (32) through a first control valve (22) controlling the inlet of liquids to the unit which is open during normal operation. A second control valve (23) controlling the back flushing liquid is closed during normal operation. A third control valve (24) controlling the outlet of treated (clean) liquids is also a backpressure valve, which is partly closed to create the necessary backpressure for the sludge flow during normal operation. A control valve (25) regulates the sludge discharge. A differential pressure transmittal connected across the filter/separator unit between P1 and P2 transmits data to the PLC, and when the preset pressure differential limit of 30 mbar is reached, back flushing is initiated. Flow meter (26) and second flow meter (27) measure the flows in the main inlet line and the sludge line. The two flows are transmitted to a PLC, which converts the signal to a percentage of the main flow and are used for regulation of control valve 25. When a preset value (3-10%) is programmed into the PLC, the flow of the set value is maintained in the sludge line.

For back flushing and purging the filter screen, the control valves (22, 24) are closed during the back flushing. Second control valve (23) opens and sends untreated liquids through the center of the unit back flushing the particles out of the filter screen towards the discharge chamber. The back flushing cycle is set to a preset time limit, and when reaching the limit the system reverts to normal operation.

All valves are automated and operated by a PLC.

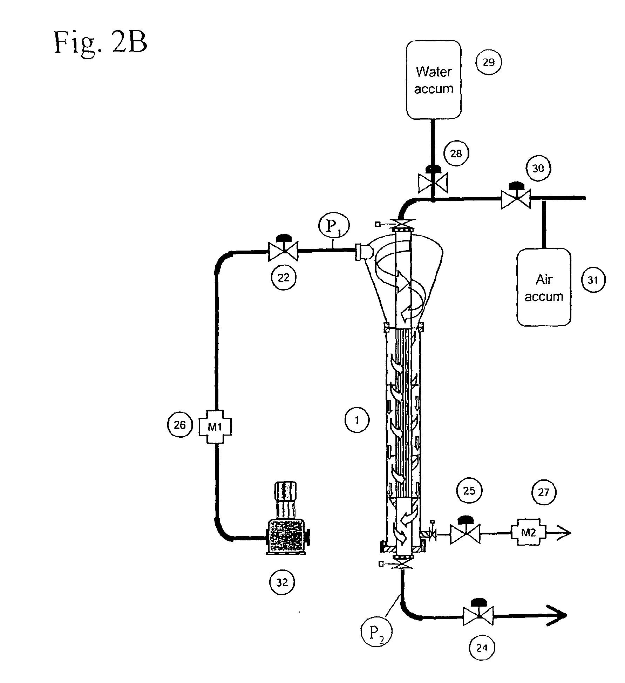

A modified embodiment of the invention is shown in Fig 2B. In normal operation of this modified embodiment, liquid flows to the filter separator from a pump (32) and first control valve (22) controlling the inlet of liquids to the unit is open during normal operation. Fifth and sixth control valves (28, 30) controlling the back flushing liquid 29 and compressed air 31 are closed during normal operation. The third control valve (24) controlling the outlet of treated (clean) liquids is also a backpressure valve, which is partly closed to create the necessary backpressure for the sludge flow during normal operation. A control valve (25) regulates the sludge discharge. A differential pressure transmittal connected across the filter/separator unit between P1 and P2 sends data to the PLC, and when the preset level (30mbar) is reached, back flushing is initiated.

For alternate back flushing, the first and third control valves (22, 24) close during back flushing. The fifth control valve (28) controlling a pressurized back flushing liquid tank (29) opens and clean liquids flow through the center of the unit back flushing the particles out of the filter screen towards the discharge chamber. The sixth control valve (30) controlling a pressurized air tank (31) opens towards the end of the back flushing cycle for air scrubbing the filter element (11). The back flushing cycle is set to a preset time limit, when reaching the limit, the system reverts to normal operation.

All valves are automated and operated by a PLC.

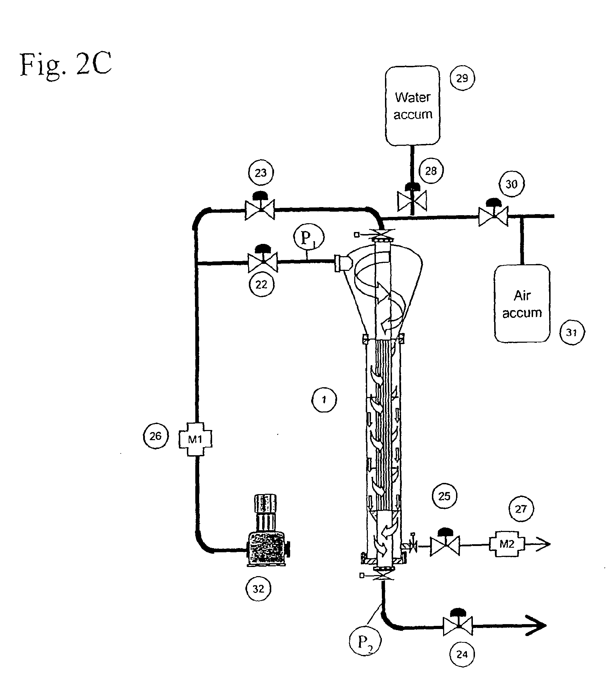

As shown in Fig. 2C, the system can be configured to include both of the embodiments of Figs. 2A and 2B set forth above. Raw water is used for back flushing if it is sufficiently clean. Alternatively, clean water is used.

The filter separator of this invention can be installed in every angle from a vertical to a horizontal position, but an angle of minimum 10 degrees towards the discharge is recommended. In a horizontal position and up to a position of 20 degrees, a continual bleeding of the sludge discharge is required. From a position of 20 degrees up to a vertical position the sludge discharge can be emptied according to need.

The hydro-cyclone part of the filter separator can be built in any material suited for the application. Standard materials are epoxy coated carbon steel, stainless steel, copper nickel, GRE (glass reinforced epoxy) and GRP (glass fiber reinforced polyester). Glass fiber reinforced polypropylene is recommended for use in seawater. This material is strong, light, and can easily be shaped to desired design. For the installation of larger flow systems aboard ships the hydro-cyclone can be built in several parts for easier access to the installation area. Other relevant materials are stainless steel or titanium.

The filter separator is developed to work with low pressure pumps and for high flows up to 1000 m³/h depending on filter rate. The filter separator is installed with a backpressure valve to enable it to maintain sludge discharge when installed under sea level. With the control valve installed on the outlet line a constant differential pressure is created to ensure a constant flow from the discharge chamber. No other separator has such a valve installed on the discharge and has higher demands for pressure loss.

The use of filter separator with UV in ballast water systems is shown in Figure 2A. The filter separator removes particles and organisms to a specified micron size and the UV kills or inactivates the organisms, bacteria and pathogens in ballast water. Each microorganism must absorb a specific UV dose to be destroyed. The UV penetrates the bacteria wall and is absorbed by the DNA and consequently destroys life and prevents reproduction. The Microkill UV is designed for efficient inactivation of organisms with a very low-pressure drop to meet the requirements of ballast systems and pumps. UV light, when used in the wavelength ranging from 215-315 nm (nanometer) the UV-C spectrum causes irreparable damage to the DNA in bacteria and microorganisms. The most potent and effective wavelength for damage of the DNA is 253.7 nm.

In accordance with the system process, ballast water is pumped by the ballast pump into the filter separator were larger particles and organisms are removed and discharged overboard were the ballast water originates. The processed ballast water flows into the UV system were the organisms; bacteria etc. are killed or inactivated when the DNA is damaged. From the UV system the ballast water is distributed into the different ballast tanks aboard the ship.

When ballast water is discharged in a receiving port, the water is pumped through the DV system a second time but bypasses the filter separator to avoid a handling problem of the sludge.

Various changes may be made to the equipment arrangements embodying the principles of the invention. The foregoing embodiments are set forth in an illustrative and not in a limiting sense. The scope of the invention is defined by the claims appended hereto.

## Claims

1. A filter separator apparatus (1) for removing particles and organisms from liquid comprising:
a conical inlet chamber (3), a separation and filter chamber (4), and a discharge chamber (5) with a sludge outlet (9), the chambers connected along a common axis and together defining a liquid flow path;
a first outlet pipe (19), a screen filter (11) and a second outlet pipe (10) aligned along said axis with the first outlet pipe (19) positioned within the conical inlet chamber, the screen filter within the separation and filter chamber (4), and the second outlet pipe within the discharge chamber (5);
the conical inlet chamber having a tangentially mounted inlet pipe (2) to establish a helical circular motion of entering liquid;
the inlet pipe and the conical inlet chamber for receiving high volume low pressure liquid, and for directing the liquid in a helical circular motion around the first outlet pipe and into and through the separation and filter chambers such that particles and organisms of specific gravity greater than that of the liquid are carried by the liquid through the separation and filter chamber into the discharge chamber to the sludge outlet, and particles and organisms of specific gravity near to that of the liquid are filtered from liquid passing through the filter screen so that liquid purified of particles and organisms is discharged from one of the first and second outlet pipes.

2. A filter and separator apparatus as defined in claim 1 in which the first and second outlet pipes are each fitted with an outlet control valve (20, 21) for controlling flow of liquid from the apparatus; providing for back flush of liquid to purge the filter screen; and to maintain a discharge pressure head on the sludge outlet.

3. A filter and separator apparatus as defined in claim 2 in which a flow restrictor (6) is positioned between the filter and separator chamber and discharge chamber to reduce liquid turbulence and back flow.

4. An apparatus as defined in claim 2 which further includes ultra violet light (uv) for inactivating any organisms, bacteria and pathogens in purified liquid discharged from the outlet pipe.

5. A filter separator system (1) for removing particles and organisms from liquid comprising:
a pump (32) and a normally open first control valve (22) for controlling inlet of fluids to the system;
a conical inlet chamber (3), a separation and filter chamber (4), and a discharge chamber (5) with a sludge outlet (9), the chambers being connected and together defining a liquid flow path;
a screen filter (11) within the separation and filter chamber; and first and second pipes (7, 12) defining outlets from the system for liquid passing through the screen filter;
the inlet chamber having a tangentially mounted inlet pipe to establish a helical circular motion of liquid entering the separation and filter chamber, a first portion of liquid flowing through the screen filter for filtering of particles and organisms and flowing to the first and second pipes, a second portion of liquid flowing along the filter chamber wall carrying particles and organisms and flowing unfiltered into the discharge chamber;
a normally closed second control valve (23) when open for directing inlet fluids through one of said outlet pipes for back flush of the screen filter;
a third control valve (24) in the other of said outlet pipes for maintaining a back pressure on the system;
a fourth control valve (25) for regulating sludge discharge; whereby particles and organisms are removed from the first portion of liquid in the filter and separation chamber and liquid purified of particles and organisms is discharged from the outlet pipe, and the second portion of unfiltered liquid and sludge are removed from the apparatus through the sludge outlet.

6. A filter and separator system as defined in claim 5 which further comprises a first flow meter (M-1) positioned at the pump outlet and a second flow meter (M-2) positioned at the sludge outlet for regulating flow through the system.

7. A filter separator system as defined in claims 6 which further comprises:
a water accumulation tank (29) and control valve (28) connected to one of said first and second pipes (7, 12) for water back flush of the filter separator;
an air accumulation tank (31) and control valve (30) connected to one of said outlet pipes (10, 19) for air scrubbing of the filter separator; and,
a sludge control valve (25) for regulating sludge discharge.

8. A method of removing particles and organisms from liquid utilizing a filter separator apparatus (1) having a conical inlet chamber (3) with a tangentially mounted inlet pipe (2), having a separation and filter chamber (4) defining a longitudinal axis, a screen filter (ii) disposed along the axis of the chamber, having an outlet pipe (10,19) for receiving filtered liquid, having a discharge chamber (5) for receiving sludge from the separation an filter chamber, and having a source of air (31) for back flushing the screen filter comprising the steps of:
establishing a low pressure, high volume flow of liquid;
directing the flow of liquid through the inlet pipe and inlet chamber in a helical circular motion without creating a vortex;
accelerating the helical circular motion of liquid as it flows into the filter and separation chamber to separate a first portion of particles and organisms having a specific gravity greater than the liquid;
passing a first portion of liquid and the first portion of particles and organisms unfiltered as sludge into the discharge chamber;
passing a second portion of the flow of liquid through the screen filter to screen out particles and organisms having a specific gravity near to that of the liquid;
discharging as sludge the first portion of separated and filtered particles and organisms together with the first portion of liquid;
discharging the second portion of liquid free of separated and filtered particles and organisms to the outlet pipe, and
purging the filter by back flushing with air.

9. A method according to claim 8 which includes the step of maintaining a back pressure on the liquid flow.

10. A method according to claim 8 which includes the steps of metering the established flow of liquid; metering the discharge of sludge; and using a ratio of the metered values to control volume of liquid flow.

11. A method according to claim 8 which includes the step of subjecting discharged liquid to ultraviolet light to inactivate any organisms, bacteria and pathogens in the liquid.

12. A method according to claim 8 which includes the steps of regulating the internal pressure of the sludge chamber to achieve a sludge flow which is up to 10% of the main flow; and discharging the remaining flow of liquid free of separated and filtered particles and organisms."

## Patentansprüche

1. Filtertrennvorrichtung (1) zum Entfernen von Partikeln und Organismen aus einer Flüssigkeit, umfassend:
eine konische Einlasskammer (3), eine Trenn- und Filterkammer (4) und eine Ableitungskammer (5) mit einem Schlammauslass (9), wobei die Kammern entlang einer gemeinsamen Achse verbunden sind und zusammen einen Flüssigkeitsflussweg definieren;
ein erstes Auslassrohr (19), einen Siebfilter (11) und ein zweites Auslassrohr (10), die entlang der Achse ausgerichtet sind, wobei das erste Auslassrohr (19) in der konischen Einlasskammer, der Siebfilter in der Trenn- und Filterkammer (4) und das zweite Auslassrohr in der Ableitungskammer angeordnet ist;
wobei die konische Einlasskammer ein tangential angebrachtes Einlassrohr (2) aufweist, um eine spiralförmige, umlaufende Bewegung von eintretender Flüssigkeit zu bilden;
wobei das Einlassrohr und die konische Einlasskammer zur Aufnahme eines großen Volumens von Flüssigkeit unter geringem Druck und zum Richten der Flüssigkeit in eine spiralförmige, umlaufende Bewegung um das erste Auslassrohr und in und durch die Trenn- und Filterkammer derart eingerichtet sind, dass Partikel und Organismen mit einem spezifischen Gewicht, das größer als das der Flüssigkeit ist, mit der Flüssigkeit durch die Trenn- und Filterkammer in die Ableitungskammer zu dem Schlammauslass befördert werden und Partikel und Organismen mit einem spezifischen Gewicht, das nahe dem der Flüssigkeit ist, aus der Flüssigkeit gefiltert werden, die durch den Siebfilter hindurchtritt, so dass Flüssigkeit, die von Partikeln und Organismen gereinigt ist, aus einem der ersten und zweiten Auslassrohre abgeführt wird.

2. Filter- und Trennvorrichtung gemäß Anspruch 1, bei der die ersten und zweiten Auslassrohre jeweils mit einem Auslasssteuerventil (20, 21) zur Steuerung des Flusses von Flüssigkeit von der Vorrichtung, zur Bereitstellung einer Rückspülung von Flüssigkeit, um den Filterschirm zu spülen, und zur Erhaltung eines Ableitungsdrucks vor dem Schlammauslass ausgestattet sind.

3. Filter- und Trennvorrichtung gemäß Anspruch 2, bei der ein Durchflussbegrenzer (6) zwischen der Filter- und Trennkammer und der Ableitungskammer positioniert ist, um eine Flüssigkeitsturbulenz und einen Rückfluss zu reduzieren.

4. Vorrichtung gemäß Anspruch 2, die ferner Ultraviolett-(UV)-Licht zum Inaktivieren von jeglichen Organismen, Bakterien und Pathogenen in der gereinigten Flüssigkeit enthält, die aus dem Auslassrohr abgeleitet wird.

5. Filtertrennsystem (1) zum Entfernen von Partikeln und Organismen aus einer Flüssigkeit, umfassend:
eine Pumpe (32) und ein normalerweise offenes erstes Steuerventil (22) zur Steuerung des Einlasses von Flüssigkeiten in das System;
eine konische Einlasskammer (3), eine Trenn- und Filterkammer (4) und eine Ableitungskammer (5) mit einem Schlammauslass (9), wobei die Kammern miteinander verbunden sind und zusammen einen Flüssigkeitsflussweg definieren;
einen Siebfilter (11) in der Trenn- und Filterkammer; und erste und zweite Rohre (7, 12), die Auslässe aus dem System für Flüssigkeit definieren, die durch den Siebfilter hindurchtritt;
wobei die Einlasskammer ein tangential angebrachtes Einlassrohr aufweist, um eine spiralförmige, umlaufende Bewegung der Flüssigkeit zu bilden, die in die Trenn- und Filterkammer eintritt, wobei ein erster Anteil der Flüssigkeit durch den Siebfilter fließt, um Partikel und Organismen auszufiltern, und zu den ersten und zweiten Rohren fließt, und ein zweiter Anteil der Flüssigkeit Partikel und Organismen befördernd entlang der Filterkammerwand und ungefiltert in die Ableitungskammer fließt;
ein normalerweise geschlossenes zweites Steuerventil (23), das wenn es geöffnet ist, zum Richten von Einlassflüssigkeiten durch eines der Ausgangsrohre zur Rückspülung des Siebfilters vorgesehen ist;
ein drittes Steuerventil (24) in dem anderen der Auslassrohre zur Aufrechterhaltung eines Gegendruckes auf dem System;
ein viertes Steuerventil (25) zur Regulierung der Schlammableitung, wobei Partikel und Organismen aus dem ersten Anteil der Flüssigkeit in der Filter- und Trennkammer entfernt werden und von Partikeln und Organismen gereinigte Flüssigkeit von dem Auslassrohr abgeleitet wird, und wobei der zweite Anteil der ungefilterten Flüssigkeit und Schlamm durch den Schlammauslass aus der Vorrichtung entfernt werden.

6. Filter- und Trennsystem gemäß Anspruch 5, das ferner ein erstes Durchflussmessgerät (M-1), das an dem Pumpenauslass angeordnet ist, und ein zweites Durchflussmessgerät (M-2) umfasst, das an dem Schlammauslass zur Regulierung des Durchflusses durch das System angeordnet ist.

7. Filter- und Trennsystem gemäß Anspruch 6, das ferner umfasst:
einen Wasserakkumulationstank (29) und ein Steuerventil (28), die mit einem der ersten und zweiten Rohre (7, 12) zur Wasserrückspülung des Filtertrenners verbunden sind;
einen Luftakkumulationstank (31) und ein Steuerventil (30), die mit einem der Auslassrohre (10, 19) zur Luftreinigung des Filtertrenners verbunden sind; und
ein Schlammsteuerventil (25) zur Regulierung der Schlammableitung.

8. Ein Verfahren zum Entfernen von Partikeln und Organismen aus Flüssigkeit, wobei eine Filtertrennvorrichtung (1) verwendet wird, die eine konische Einlasskammer (3) mit einem tangential angebrachten Einlassrohr (2), eine Trenn- und Filterkammer (4), die eine longitudinale Achse definiert, wobei ein Siebfilter (ii) entlang der Achse der Kammer angeordnet ist, ein Auslassrohr (10, 19) zur Aufnahme gefilterter Flüssigkeit, eine Ableitungskammer (5) zur Aufnahme von Schlamm aus der Trenn- und Filterkammer und eine Luftquelle (31) zur Rückspülung des Siebfilters aufweist, umfassend die Schritte:
Bildung eines Flüssigkeitsflusses geringen Druckes und hohen Volumens;
Richten des Flüssigkeitsflusses durch das Einlassrohr und die Einlasskammer in eine spiralförmige, umlaufende Bewegung, ohne dass ein Wirbel gebildet wird;
Beschleunigen der spiralförmigen, umlaufenden Bewegung der Flüssigkeit, wenn sie in die Filter- und Trennkammer fließt, um einen ersten Anteil von Partikeln und Organismen abzutrennen, die ein höheres spezifisches Gewicht als die Flüssigkeit aufweisen;
Hindurchtreten eines ersten Anteils der Flüssigkeit und des ersten Anteils der Partikel und Organismen ungefiltert als ein Schlamm in die Ableitungskammer;
Hindurchtreten eines zweiten Anteils des Flüssigkeitsflusses durch den Siebfilter, um Partikel und Organismen auszusieben, die ein spezifisches Gewicht nahe dem der Flüssigkeit haben;
Ableiten des ersten Anteils der abgetrennten und ausgefilterten Partikel und Organismen gemeinsam mit dem ersten Anteil der Flüssigkeit als ein Schlamm;
Ableiten des zweiten Anteils der Flüssigkeit, der frei von abgetrennten und ausgefilterten Partikeln und Organismen ist, zu dem Auslassrohr, und
Reinigen des Filters durch Rückspülung mit Luft.

9. Verfahren gemäß Anspruch 8, das den Schritt der Aufrechterhaltung eines Gegendruckes auf den Flüssigkeitsfluss umfasst.

10. Verfahren gemäß Anspruch 8, das die Schritte des Messens des gebildeten Flüssigkeitsflusses, des Messens der Ableitung des Schlamms und des Verwendens eines Verhältnisses der gemessenen Werte umfasst, um ein Volumen des Flüssigkeitsflusses zu steuern.

11. Verfahren gemäß Anspruch 8, das den Schritt umfasst, bei dem abgeleitete Flüssigkeit einem Ultraviolett-Licht ausgesetzt wird, um jegliche Organismen, Bakterien und Pathogene in der Flüssigkeit zu inaktivieren.

12. Verfahren gemäß Anspruch 8, das die Schritte des Regulierens des inneren Druckes der Schlammkammer, um einen Schlammfluss, der bis zu 10% des Hauptflusses beträgt, zu erreichen, und des Ableitens des übrigen Flusses der Flüssigkeit umfasst, die frei von abgetrennten und ausgefilterten Partikeln und Organismen ist.

## Revendications

1. Appareil de séparation et de filtrage (1) destiné à éliminer les particules et les organismes des liquides, comprenant :
une chambre d'admission conique (3), une chambre de séparation et de filtrage (4), et une chambre d'évacuation (5) comprenant un orifice de sortie pour les boues (9), les chambres étant reliées le long d'un axe commun et définissant ensemble un trajet d'écoulement des liquides ;
un premier conduit d'évacuation (19), un filtre à tamis (11) et un second conduit d'évacuation (10) aligné le long dudit axe avec le premier conduit d'évacuation (19) placé dans la chambre d'admission conique, le filtre à tamis dans la chambre de séparation et de filtrage (4), et le second conduit d'évacuation dans la chambre d'évacuation (5) ;
la chambre d'admission conique comportant un conduit d'admission (2) monté de manière tangentielle afin d'entraîner le liquide entrant dans un mouvement circulaire hélicoïdal ;
le conduit d'admission et la chambre d'admission conique étant destinés à recevoir un grand volume de liquide à faible pression, et à diriger le liquide en un mouvement circulaire hélicoïdal autour du premier conduit d'évacuation et dans et à travers les chambres de séparation et de filtrage de manière à ce que les particules et les organismes ayant une densité supérieure à celle du liquide soient portés par le liquide à travers la chambre de séparation et de filtrage dans la chambre d'évacuation et jusqu'à l'orifice de sortie pour les boues, et à ce que les particules et les organismes ayant une densité proche de celle du liquide soient filtrés hors du liquide passant à travers le filtre à tamis de manière à ce que du liquide purifié de ses particules et organismes soit évacué par l'un du premier et du second conduit d'évacuation.

2. Appareil de séparation et de filtrage selon la revendication 1, dans lequel les premier et second conduits d'évacuation comportent chacun une soupape de commande d'évacuation (20, 21) destinée à contrôler l'écoulement du liquide hors de l'appareil, fournissant un flux à circulation inversée de liquide pour purger le filtre à tamis et pour maintenir une pression d'évacuation sur l'orifice de sortie pour les boues.

3. Appareil de séparation et de filtrage selon la revendication 2, dans lequel un dispositif de limitation de l'écoulement (6) est placé entre la chambre de séparation et de filtrage et la chambre d'évacuation afin de réduire les turbulences du liquide et l'écoulement inversé.

4. Appareil selon la revendication 2, comprenant en outre des ultraviolets (UV) pour désactiver les organismes, bactéries et organismes pathogènes éventuellement présents dans le liquide purifié évacué par le conduit d'évacuation.

5. Système de séparation et de filtrage (1) destiné à éliminer les particules et les organismes des liquides, comprenant :
une pompe (32) et une première soupape de commande (22) normalement ouverte, destinée à contrôler l'admission de liquides dans le système ;
une chambre d'admission conique (3), une chambre de séparation et de filtrage (4), et une chambre d'évacuation (5) comprenant un orifice de sortie pour les boues (9), les chambres étant reliées et définissant ensemble un trajet d'écoulement des liquides ;
un filtre à tamis (11) dans la chambre de séparation et de filtrage ; et un premier et un second conduits (7, 12) définissant des orifices de sortie du système pour le liquide passant à travers le filtre à tamis ;
la chambre d'admission comportant un conduit d'admission monté de manière tangentielle afin d'entraîner le liquide entrant dans la chambre de séparation et de filtrage dans un mouvement circulaire hélicoïdal, une première partie du liquide s'écoulant à travers le filtre à tamis de manière à en filtrer les particules et les organismes et s'écoulant vers le premier et le second conduits, une seconde partie du liquide s'écoulant le long de la paroi de la chambre de filtrage transportant des particules et des organismes et s'écoulant sans avoir été filtré dans la chambre d'évacuation ;
une deuxième soupape de commande (23) normalement fermée, lorsque ouverte dirigeant les fluides entrants à travers l'un ou l'autre desdits conduits d'évacuation pour envoyer un écoulement inversé dans le filtre à tamis ;
une troisième soupape de commande (24) dans l'autre desdits conduits d'évacuation, destinée à maintenir une contre-pression sur le système ;
une quatrième soupape de commande (25) destinée à réguler l'évacuation des boues ; moyennant quoi les particules et les organismes sont éliminés de la première partie du liquide dans la chambre de séparation et de filtrage et le liquide purifié des particules et des organismes est évacué du conduit d'évacuation, et la seconde partie de liquide non filtrée et le s boues sont évacuées de l'appareil par l'orifice de sortie pour les boues.

6. Système de filtrage et de séparation selon la revendication 5, comprenant en outre un premier débitmètre (M-1) placé au niveau de l'orifice de sortie de pompe et un second débitmètre (M-2) placé au niveau de l'orifice d'évacuation des boues pour réguler l'écoulement à travers le système.

7. Système de filtrage et de séparation selon la revendication 6, comprenant en outre :
un réservoir d'accumulation d'eau (29) et une soupape de commande (28) reliés à l'un desdits premier et second conduits (7, 12) pour envoyer un écoulement inversé d'eau dans le séparateur à filtre ;
un réservoir d'accumulation d'air (31) et une soupape de commande (30) reliés à l'un desdits conduits d'évacuation (10, 19) pour nettoyer à l'air le filtre séparateur ; et
une soupape de commande de boues (25) destinée à réguler l'évacuation des boues.

8. Procédé d'élimination de particules et organismes présents dans des liquides à l'aide d'un appareil de séparation et de filtrage(1) comprenant une chambre d'admission conique (3) comportant un conduit d'admission (2) monté de manière tangentielle, comprenant une chambre de séparation et de filtrage (4) définissant un axe longitudinal, un filtre à tamis (11) disposé le long de l'axe de la chambre, comprenant un conduit d'évacuation (10, 19) destiné à recevoir du liquide filtré, comprenant une chambre d'évacuation (5) destinée à recevoir les boues provenant de la chambre de séparation et de filtrage, et comprenant une source d'air (31) destinée à l'envoi, au filtre à tamis, d'un écoulement inversé, comprenant les étapes consistant à :
créer un grand volume d'écoulement de liquide à faible pression ;
diriger l'écoulement de liquide à travers le conduit d'admission et la chambre d'admission en un mouvement circulaire hélicoïdal sans créer de tourbillon ;
accélérer le mouvement circulaire hélicoïdal de liquide lorsqu'il s'écoule dans la chambre de filtrage et de séparation, afin de séparer une première partie des particules et des organismes ayant une densité supérieure à celle du liquide ;
faire passer une première partie du liquide et la première partie des particules et organismes non filtrés sous la forme de boues dans la chambre d'évacuation ;
faire passer une seconde partie de l'écoulement de liquide à travers le filtre à tamis pour en extraire les particules et organismes ayant une densité proche de celle du liquide ;
évacuer sous la forme de boues la première partie des particules et organismes séparés et filtrés avec la première partie du liquide ;
évacuer la seconde partie du liquide libéré des particules et organismes séparés et filtrés par le conduit d'évacuation ; et
purger le filtre par l'envoi d'un écoulement inversé avec de l'air.

9. Procédé selon la revendication 8, comprenant l'étape consistant à maintenir une contre-pression sur l'écoulement de liquide.

10. Procédé selon la revendication 8, comprenant les étapes consistant à mesurer l'écoulement de liquide créé ; à mesurer l'évacuation des boues ; et à utiliser un ratio des valeurs mesurées pour contrôler le volume de l'écoulement de liquide.

11. Procédé selon la revendication 8, comprenant l'étape consistant à soumettre le liquide évacué à la lumière ultraviolette afin de désactiver les organismes, bactéries et organismes pathogènes éventuellement présents dans le liquide.

12. Procédé selon la revendication 8, comprenant les étapes consistant à réguler la pression interne de la chambre pour les boues afin d'obtenir un écoulement des boues représentant jusqu'à 10 pour cent de l'écoulement principal ; et à évacuer l'écoulement de liquide restant, libéré des particules et organismes séparés et filtrés.
